# EUROPEAN PATENT APPLICATION

(11) **EP 2 525 273 A1**
(43) Date of publication of application: **21.11.2012**
(21) Application number: 10843689.0
(22) Date of filing: 31.05.2010
(51) Int. Cl.: G06F 3/038, G06F 3/048

(54) **METHOD AND MOBILE TERMINAL FOR REALIZING DIRECTION IDENTIFICATION OF OPTICAL FINGER NAVIGATION**

(30) Priority: 19.01.2010 CN 201010001259
(71) Applicant: ZTE Corporation, Shenzhen, Guangdong 518057 (CN)
(72) Inventor: ZHANG, Lei, Shenzhen Guangdong 518057 (CN); RUAN, Meisi, Shenzhen Guangdong 518057 (CN)
(74) Representative: Jansen, Cornelis Marinus
(86) International application number: PCT/CN2010/073395
(87) International publication number: WO 2011/088649

(57) **Abstract**

The disclosure discloses a method for implementing direction identification of Optical Finger Navigation (OFN). The method comprises: dividing a plane into four areas by using two straight lines which intersect at an origin of coordinate and are not vertical nor parallel with each other; collecting data on touch points of a finger during sliding on the OFN, and reporting the collected data on touch points; determining in which area a displacement vector produced by the sliding is located, and obtaining a displacement direction key based on the determined area to identify an OFN direction. The disclosure also discloses a mobile terminal for implementing direction identification of OFN.

## Description

### TECHNICAL FIELD

The disclosure relates to the technology of Optical Finger Navigation (OFN), particularly to a method and mobile terminal for implementing direction identification of OFN.

### BACKGROUND

At present, in the middle/high-end mobile terminals, such as in mobile phones, mobile terminals with an OFN function are very common. The OFN's primary function is to determine the movement trend and the direction of a finger by comparing and analyzing the collected image reflected from the finger based on principles of optics The mobile terminal with OFN function is provided with an area for implementing the OFN function; the sliding of a finger on the area can be considered as the sliding of a finger on the OFN. The implementation of OFN function identifies the movement direction of a finger based on the sliding of a finger on the OFN. Therefore, when the OFN function is used, the key point is to identify the movement direction of a finger; however, in actual applications, an error often occurs in the direction identification due to different finger sliding habits; thus, a false operation is caused.

The present algorithm for the movement direction identification of a finger in the OFN function is to determine a direction key value by determining the number of points falling on a coordinate axis within a period. Generally, a mobile terminal with OFN function comprises at least an OFN module, a master module and a display module, in which, the OFN module is configured to collect the movement displacement of a finger and to report the movement points to the master control module in a form of coordinates (x, y); the master control module is configured to process the received coordinate points and to identify all coordinate points within one period as one of the up, down, left and right directions. The display module is configured to display the corresponding icon switch of the finger movement in the mobile terminal system; specifically, a Light Emitting Diode (LED) arranged on the surrounding of the mobile terminal induction area emits infrared rays (870nm) to radiate a finger; part of the infrared rays will be reflected to the induction area when the infrared rays radiate onto the finger. Then, the induction area quantizes the reflected infrared rays into data, based on which the OFN module calculates the movement displacement of the finger and then outputs the movement displacement to the master control module in a form of coordinates. Accordingly, the master control module will identify the received coordinate of the points within a certain time interval, and identify the sliding action of the finger on the OFN as a key value of a direction key; here, the direction key refers to a up key, a down key, a left key and a right key which represent the directions of up, down, left and right respectively.

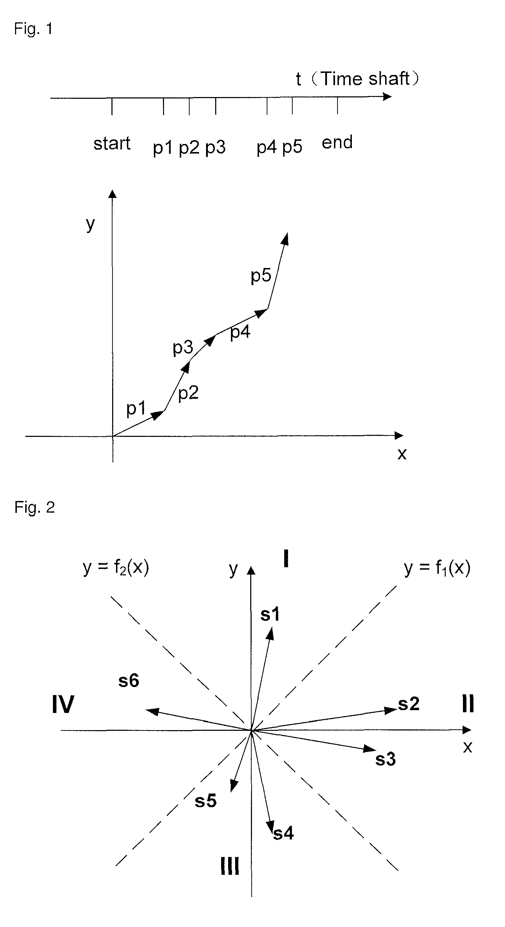

Referring to Fig. 1, it is supposed that the time period for the identifying is between Start and End, i.e., the time period for the identifying is within a time period of (start, end), then, the collected points p1, p2, p3, p4, p5 depict the finger displacement vector S= p1+p2+p3+p4+p5 on the x axis and the y axis; at this moment, the displacement vector S can represent to some extent the movement tend of the finger on the OFN. Therefore, the identification of OFN direction key can be converted into the identification of the movement displacement of the finger on the OFN within a time period (start, end) as a direction key.

At present, the algorithm of identification could calculate the up, down, left and right directions represented by the displacement vector S only when the displacement vector S is parallel to the x axis or the y axis, that is, the method of identification in the prior art is limited to the condition in which the finger movement on the OFN is parallel to the x axis or the y axis; if the finger movement on the OFN is not parallel to the x axis or the y axis, it is easy to cause a false judgment or a missing judgment. However, in actual applications, it is difficult for the user to ensure that the sliding track of the finger on the OFN is parallel or vertical to the x axis or the y axis in each operation due to the sliding habits of a finger; obviously, an identification method with better compatibility and popularity is necessary to realize the direction identification of the OFN.

### SUMMARY

In view of the problem above, the main object of the disclosure is to provide a method and a mobile terminal for implementing direction identification of the OFN, which can strengthen the direction identification of the OFN, reduce the deviation of the direction identification of the OFN and reduce the rate of false judgment.

In order to realize the purpose above, the technical scheme of the disclosure is implemented as follows.

The disclosure provides a method for implementing direction identification of OFN, which comprises: dividing a plane into four areas by using two straight lines which intersect at an origin of coordinate and are not vertical nor parallel with each other, and further comprises: collecting data on touch points of a finger during sliding on the OFN, and reporting the collected data on touch points; determining in which area a displacement vector produced by the sliding is located, and obtaining a displacement direction key based on the determined area to identify an OFN direction.

The step of dividing the plane into four areas and the step of reporting the collected data on touch points may be performed concurrently, or the step of dividing the plane into four areas may be performed after the step of reporting the collected data on touch points.

The two straight lines which intersect at an origin of coordinate and are not vertical or parallel with each other may comprise: y=x and y=-x.

The step of reporting the collected data on touch points may comprise: reporting the collected data on touch points in a form of coordinates (x, y); and the method may further comprise: after the data on touch points is reported, generating the displacement vector based on the coordinates of the reported data on touch points.

The method may further comprise: when the displacement vector is located at a boundary line, not responding to a finger movement corresponding to the displacement vector.

The method may further comprise: after the OFN direction is identified, converting a finger movement into a corresponding icon movement and displaying the icon movement in a Liquid Crystal Display (LCD).

The disclosure also provides a mobile terminal for implementing direction identification of Optical Finger Navigation (OFN), which comprises: an OFN module and a master control module, wherein the OFN module is configured to collect data on touch points of a finger during sliding on the OFN, and to report the collected data on touch points to the master control module in a form of coordinates; the master control module is configured to divide a plane into four areas by using two straight lines which intersect at an origin of coordinate and are not vertical nor parallel with each other, to determine in which area a displacement vector produced by the sliding is located, and to obtain a displacement direction key based on the determined area to identify an OFN direction.

The master control module may further comprise a division sub-module, a determination sub-module and a storage sub-module, wherein, the division sub-module is configured to divide the plane into four areas by using the two straight lines which intersect at the origin of coordinate and are not vertical nor parallel with each other; the determination sub-module is configured to determine in which area the displacement vector produced by the sliding is located, and to obtain the displacement direction key based on the determined area; and the storage sub-module is configured to store information of the areas divided by the division sub-module and to provide the information to the determination sub-module for determining in which area the displacement vector is located.

The two straight lines which intersect at an origin of coordinate and are not vertical or parallel with each other may comprise: y=x and y=-x.

The mobile terminal may further comprise: a display module configured to display, in a Liquid Crystal Display (LCD), an icon switch corresponding to a finger movement.

The method and the mobile terminal for implementing the direction identification of the OFN in the disclosure comprise: dividing the plane into four areas by using two straight lines which intersect at an origin of coordinate and are not vertical nor parallel with each other, and then determine the corresponding displacement direction by determining in which area the displacement vector produced by the sliding is located within a certain period. In this way, by reasonably segmenting the coordinate axis and re-dividing the areas corresponding to up, down, left and right directions, the direction identification of the OFN is effectively enhanced, the deviation of the direction identification of the OFN is reduced and the rate of false judgment is reduced; the effect is obvious.

Besides, in the specific implementation, two crossing straight lines with 45 degree angles relative to the parallel or the vertical direction can be configured to divide the plane into four symmetrical and equal areas; or according to the sliding habits of a user's finger, for example, it is easy for most people to slide their fingers up and down rather than left and right, and the left and right sliding might incline upwards with a bigger angle, other equations can be configured to divide the plane into relatively bigger left and right areas and relatively smaller up and down areas, that is, the left area and the right area are bigger than the up area and the down area respectively, so as to prioritize identification of the left and right direction keys. The disclosure is more flexible and convenient in implementation, has a wider application range, better compatibility, and increased popularity.

### BRIEF DESCRIPTION OF THE DRAWINGS

Fig. 1 shows a coordinate graph of finger movement tracks on the OFN within a certain period;
Fig. 2 shows a schematic diagram of dividing direction areas during direction identification of OFN according to the disclosure; and
Fig. 3 shows a flowchart of a method for implementing direction identification of OFN according to the disclosure.

### DETAILED DESCRIPTION

In actual applications of an OFN function, the sliding displacement of a finger on the OFN has the following two conditions: one condition is that a displacement vector S is parallel to the x axis or the y axis, the other condition is that the displacement vector S is not parallel to the x axis or the y axis. The first condition is the ideal condition, the displacement vector S is parallel to the x axis or the y axis, that is, the value of the displacement vector S is (0, a), (0, -a), (-a, 0) or (a, 0), wherein a is a positive integer; in such condition, it is easy to calculate up, down, left and right keys represented by the displacement vector S; however, in the second condition, it is difficult to calculate the direction of the displacement vector S.

Therefore, the main idea of the disclosure is: dividing a plane into four areas by using two straight lines which intersect at an origin of coordinate and are not vertical nor parallel with each other, determining a corresponding displacement direction based on the coordinate area where a displacement vector produced by the sliding is located within a certain period to identify an OFN direction.

Fig. 2 shows a schematic diagram of dividing direction areas during direction identification of OFN according to the disclosure; as shown in Fig. 2, the two straight lines which intersect at an origin of coordinate and are not vertical nor parallel with each other are: y=f₁(x) and y=f₂(x); the two straight lines divide a plane into four areas, namely, an area I, an area II, an area III and an area IV, wherein the whole part of the area I is located above the x axis; the area II, the area III and the area IV are arranged clockwise in turn.

Accordingly, if a displacement vector starting from an original point is located in the area I, for example, s1, the displacement direction is identified as an up key; if the displacement vector starting from the original point is located in the area III, for example, s4 and s5, the displacement direction is identified as a down key; if the displacement vector starting from the original point is located in the area II, for example, s2 and s3, the displacement direction is identified as a right key; if the displacement vector starting from the original point is located in the area IV, for example, s6, the displacement direction is identified as a left key.

Preferably, the two straight line equations may be y=x and y=-x, that is, two crossing straight lines with 45 degree angles relative to the parallel or vertical direction are configured to divide the plane into four symmetrical and equal areas; in such condition, the implementation is easy; of course, other straight line equations can also be configured according to requirements of sliding habits of a user's finger, for example, most people are accustomed to sliding their fingers up and down rather than left and right, thus critical errors are caused during left and right slides, therefore, two straight lines with 30 degree angles relative to the vertical direction can be configured to divide the plane into relatively bigger left and right areas and relatively smaller up and down areas, so as to prioritize identification of the left and right direction keys.

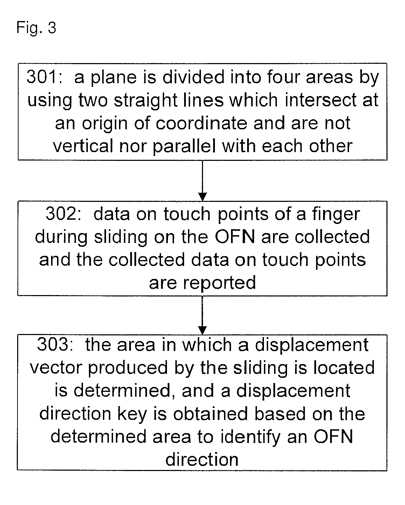

The specific flowchart of a method for implementing direction identification of OFN according to the disclosure is illustrated below in detail in conjunction with Fig. 3; as shown in Fig. 3, the method includes the following steps.
Step 301: a plane is divided into four areas by using two straight lines which intersect at an origin of coordinate and are not vertical nor parallel with each other;
   here, proper straight line equations are selected in accordance with requirements; two straight lines y=f₁(x) and y=f₂(x) corresponding to the straight line equations are configured to divide the plane into up, down, left and right areas;
   preferably, y=x and y=-x can be used, that is, two crossing straight lines with 45 degree angles relative to the parallel or vertical direction are configured to divide the plane into four symmetrical and equal areas.
Step 302: data on touch points of a finger during sliding on the OFN are collected and the collected data on touch points are reported;
   here, when a mobile terminal is started after it is powered on, an OFN module has to be loaded to realize the OFN function; then, when a finger slides or glare radiates on the OFN , the OFN module starts to collect each data on touch points during sliding on the OFN and reports the collected data on touch points to a master control module in a form of coordinates (x, y); after receiving the coordinate, the mast control module starts to process and forms a displacement vector according to the coordinate of the data on touch points during sliding on the OFN.
   In actual applications, the execution order of step 301 and step 302 are not limited, step 301 can be executed first, or step 302 can be executed first, or step 301 and step 302 can be executed simultaneously, only if they are executed before step 303.
Step 303: the area in which a displacement vector produced by the sliding is located is determined, and a displacement direction key is obtained based on the determined area to identify an OFN direction.

Here, after being processed by the master control module, data on touch points of a finger during sliding on the OFN within a certain period can be identified as a corresponding direction key; specifically, if the displacement vector produced by the sliding is located in an upper divided area, it is determined that the displacement direction key is an up key; if the displacement vector produced by the sliding is located in a lower divided area, it is determined that the displacement direction key is a down key; if the displacement vector produced by the sliding is located in a left divided area , it is determined that the displacement direction key is a left key; if the displacement vector produced by the sliding is located in a right divided area, it is determined that the displacement direction key is a right key. As shown in Fig. 2, the area I, the area III, the area II and the area IV represent the upper area, the lower area, the right area and the left area respectively; the displacement vector s1 is identified as the up key; the displacement vectors s2 or s3 is identified as the right key; the displacement vectors s4 or s5 is identified as the down key; the displacement vector s6 is identified as the left key.

If the displacement vector is coincidently located at a boundary line, a finger movement corresponding to the displacement vector is not responded to.

So far, a process of the direction identification of the OFN is implemented; a next process can be prepared.

Further, after step 303, the method further includes: converting a finger movement into a corresponding icon movement and displaying the icon movement in a Liquid Crystal Display (LCD).

In order to realize the above method, the disclosure also provides a mobile terminal for implementing direction identification of OFN, wherein the mobile terminal includes: an OFN module and a master control module; wherein the OFN module is configured to collect data on touch points of a finger during sliding on the OFN, and to report the collected data on touch points to the master control module in a form of coordinates; the master control module is configured to process the received coordinate and to obtain a corresponding displacement direction key based on a finger movement within a certain period;
the key lies in that: the master control module further includes: a division sub-module, a determination sub-module and a storage sub-module;
the division sub-module is configured to divide a plane into four areas by using two straight lines which intersect at the origin of coordinate and are not vertical nor parallel with each other;
the determination sub-module is configured to determine in which area the displacement vector produced by the sliding is located, and to obtain a displacement direction key based on the determined area; and
the storage sub-module is configured to store information of the areas divided by the division sub-module and to provide the information to the determination sub-module for determining in which area the displacement vector is located.

Here, the division sub-module, the determination sub-module and the storage sub-module act as function sub-modules of the master control module respectively.

Further, the mobile terminal further includes a display module configured to display an icon switch corresponding to a finger movement in a Liquid Crystal Display (LCD).

The above is the preferred embodiment of the disclosure only and is not intended to limit the protection scope of the disclosure. Any modification, equivalent substitute and improvement within the spirit and principle of the disclosure shall be included within the protection scope of the disclosure.

## Claims

1. A method for implementing direction identification of Optical Finger Navigation (OFN), comprising: dividing a plane into four areas by using two straight lines which intersect at an origin of coordinate and are not vertical nor parallel with each other, further comprising:
collecting data on touch points of a finger during sliding on the OFN, and reporting the collected data on touch points;
determining in which area a displacement vector produced by the sliding is located, and obtaining a displacement direction key based on the determined area to identify an OFN direction.

2. The method according to claim 1, wherein the step of dividing the plane into four areas and the step of reporting the collected data on touch points are performed concurrently; or
the step of dividing the plane into four areas is performed after the step of reporting the collected data on touch points.

3. The method according to claim 2, wherein the two straight lines which intersect at an origin of coordinate and are not vertical or parallel with each other comprise: y=x and y=-x.

4. The method according to claim 1 or 2, wherein the step of reporting the collected data on touch points comprises: reporting the collected data on touch points in a form of coordinates (x, y);
further comprising: after the data on touch points is reported, generating the displacement vector based on the coordinates of the reported data on touch points.

5. The method according to claim 1 or 2, further comprising:
when the displacement vector is located at a boundary line, not responding to a finger movement corresponding to the displacement vector.

6. The method according to claim 1 or 2, further comprising: after the OFN direction is identified, converting a finger movement into a corresponding icon movement and displaying the icon movement in a Liquid Crystal Display (LCD).

7. A mobile terminal for implementing direction identification of Optical Finger Navigation (OFN), comprising: an OFN module and a master control module, wherein
the OFN module is configured to collect data on touch points of a finger during sliding on the OFN, and to report the collected data on touch points to the master control module in a form of coordinates;
the master control module is configured to divide a plane into four areas by using two straight lines which intersect at an origin of coordinate and are not vertical nor parallel with each other, to determine in which area a displacement vector produced by the sliding is located, and to obtain a displacement direction key based on the determined area to identify an OFN direction.

8. The mobile terminal according to claim 7, wherein the master control module further comprises a division sub-module, a determination sub-module and a storage sub-module, wherein,
the division sub-module is configured to divide the plane into four areas by using the two straight lines which intersect at the origin of coordinate and are not vertical nor parallel with each other;
the determination sub-module is configured to determine in which area the displacement vector produced by the sliding is located, and to obtain the displacement direction key based on the determined area; and
the storage sub-module is configured to store information of the areas divided by the division sub-module and to provide the information to the determination sub-module for determining in which area the displacement vector is located.

9. The mobile terminal according to claim 8, wherein the two straight lines which intersect at an origin of coordinate and are not vertical or parallel with each other comprise: y=x and y=-x.

10. The mobile terminal according to claim 7 or 8, further comprising: a display module configured to display, in a Liquid Crystal Display (LCD), an icon switch corresponding to a finger movement.
